# EUROPEAN PATENT APPLICATION

(11) **EP 4 800 195 A1**
(43) Date of publication of application: **02.09.2026**
(21) Application number: 26156759.8
(22) Date of filing: 05.02.2026
(51) Int. Cl.: E04F 13/08, E04B 1/41, E04B 1/48, F16B 23/00, F16B 27/00, F16B 43/00

(54) **MOUNTING BRACKET**

(30) Priority: 06.02.2025 NL 2039737
(71) Applicant: SCHÖCK BAUTEILE GmbH, 76534 Baden-Baden (DE)
(72) Inventor: VAN TOL, Gert-Jan, 76534 Baden-Baden (DE)
(74) Representative: V.O.

(57) **Abstract**

The mounting bracket comprises a main body having a plate shaped body part that is provided with an aperture. The mounting bracket further comprises an adjustment body having a elongate body part that extends along a central axis that in use is oriented transversely to the plate shaped body part. The elongate body part is provided with an insertion portion for insertion into the aperture of the main body part. The elongate body part is further provided with a through hole for receiving a bolt that extends at interspace eccentrically along the central axis. The aperture is provided with inner circumferential form locking elements, and the insertion portion is provided with outer circumferential form locking elements. The adjustment body and the plate shaped body are in use displaceable relative to each other to switch the mounting bracket between a first state and a second state. In the first state the inner and outer circumferential form locking elements are disengaged and the adjustment body and the main body are free to rotate relative to each other so as to adjust a radial orientation of the eccentricity of the through hole relative to central axis. In the second state the inner and outer circumferential form locking elements are form lockingly engaged and the adjustment body and the plate shaped body are rotationally fixed relative to each other at a chosen radial orientation of the eccentricity of the through hole relative to central axis.

## Description

The invention generally relates to mounting brackets, in particular mounting brackets for mounting construction elements to a building, in particular to upright planes thereof, e.g. side walls, columns, or end faces of floors. In this context, such upright planes are hereafter also referred to as 'walls' . Such construction elements can extend along the face of the upright plane or transverse thereto. The construction elements typically transfer gravitational load via the mounting bracket, and can be load bearing, e.g. rails, beams, stairs, landings, prefabricated balconies, gangways or parapets, or ornamental e.g. panels or plates. The construction elements can be internal to the building, or external, e.g. façade elements. The construction elements may be concrete construction elements, in particular prefabricated construction elements for mounting to a building subsequent to fabrication of the construction element.

Mounting brackets are well known and typically comprise a main body that includes a plate shaped body part that is provided with an aperture through which a male fastener, e.g. a bolt, rod, dowel or stud, may be passed with which the main body is to be connected to the face of the wall. The male fastener is typically elongate and typically extends transversely to the face of the wall. The male fastener is further typically externally threaded, so as to be able to axially position and/or secure the bracket relative to the face of the wall, e.g. using a female threaded fastener, such as a nut, helicoil or threaded insert. The bracket may be carried on either one of the wall or the construction element, and the fastener may be anchored to the other of the wall or the construction element. The bracket may be carried by being integrally formed, welded, glued or fastened using fasteners.

EP 3214234 A1 discloses a prefabricated part connector for connecting a first prefabricated concrete part to a second prefabricated concrete part, as well as to a connection system having such a prefabricated part connector. The prefabricated part connector comprises a base plate and at least one cast-in anchor connected to the base plate for casting into the first prefabricated concrete part, wherein the base plate lies in a base plane and has a through-opening for a connecting element. The base plate and the at least one cast-in anchor are designed as a one-piece sheet metal bending part. The at least one cast-in anchor is bent up from the base plane with respect to the base plate at an angle. The connection system has positioning means for the positive location of the connecting element routed through the through-opening in the base plane of the base plate.

A problem associated with the known mounting brackets is to ensure that the construction element is correctly positioned relative to the wall, e.g. fastened at the proper upright and transverse coordinates of the face of the wall, and in the proper orientation relative to the wall, e.g. extending level along or transverse to the face of the wall. Correct positioning of the construction element relative to the face is in practice complicated, because it needs to be done in situ under the practical constraints of an (outside) work environment, e.g. by casting of anchoring elements for receiving the fasteners in situ into a wall, or by drilling holes for the fastener in the wall or construction element. In addition, both the bracket and the fastener are relatively coarse so as to be able to transfer a relatively heavy gravitational load of the construction element to the wall, so tolerances are relatively large and finely positioning is difficult. Also, even if positioned at the proper coordinates and with the correct orientation, tolerances of the construction element may in practice still lead to problems in correctly mounting the construction element relative to the face of the wall.

The invention aims to ameliorate the above problem. In particular, the invention aims to provide a mounting bracket with which correct positioning can more easily be ensured, while maintaining load capacity and stability of the bracket. Thereto the invention provides for a mounting bracket, comprising a main body having a plate shaped body part that is provided with an aperture, and an adjustment body having an elongate body part that extends along a central axis that in use is oriented transversely to the plate shaped body part, the elongate body part being provided with an insertion portion for insertion into the aperture of the main body part, and with a through hole for receiving a male fastener, the through hole extending along a through hole centerline at an interspace eccentrically along the central axis, wherein the aperture is provided with inner circumferential form locking elements and wherein the insertion portion is provided with outer circumferential form locking elements, and wherein the adjustment body and the plate shaped body are in use displaceable relative to each other to switch the mounting bracket between a first state wherein the inner and outer circumferential form locking elements are disengaged and the adjustment body and the main body are free to rotate relative to each other so as to adjust a radial orientation of the eccentricity of the through hole relative to central axis, and a second state wherein the inner and outer circumferential form locking elements are form lockingly engaged and the adjustment body and the plate shaped body are rotationally fixed relative to each other at a chosen radial orientation of the eccentricity of the through hole centerline of the through hole relative to central axis.

By providing the bracket with an aperture and by providing an adjustment body having an eccentric fastening hole for insertion in the aperture, and by arranging the bracket and the adjustment body to cooperate via form locking elements that in a first state allow adjustment of the radial orientation of the eccentricity of a fastener hole, and in a second state engage to rotationally fix the adjustment body and the plate shaped body in a chosen radial orientation, the correct positioning can more easily be ensured, while maintaining load capacity of the bracket.

It is observed that within the context of this specification, the term 'wherein the aperture is provided with inner circumferential form locking elements' is meant to convey that the aperture is along at least a portion of its circumference provided with inner circumferential form locking elements, i.e. not necessarily along its full circumference. Similarly, within the context of this specification, the term 'wherein the insertion portion is provided with outer circumferential form locking elements' is meant to convey that the insertion portion is along at least a portion of its circumference provided with outer circumferential form locking elements, i.e. not necessarily along its full circumference.

The upright and transverse coordinates of the bracket relative to the face of the building can be easily adjusted by rotating the adjustment body, using a male fastener, e.g. a bolt, rod, dowel or stud, that passes therethrough as a hinge pin and the through hole centerline of the through hole as a rotation axis, so that a radial orientation of the eccentric distance between the bolt hole and the main axis is achieved of which the upright and transverse components provide for the desired amount of positional adjustment and/or a chosen orientation of the plate shaped body part relative to the adjustment body. The male fastener that forms the hinge pin for the adjustment body can either be anchored to the wall or the construction element, with the bracket being anchored to the construction element or the wall respectively.

The use of form locking elements allows the main body and the adjustment body to be switched between the first and second state relatively easily, e.g. to be engaged, disengaged, adjusted and (re)engaged, yet in the second state allow locking so that a stable transfer of shear and torque can be provided, despite the eccentric position. In particular, this (re)engagement may take place in a plane that is parallel to the face of the wall, so that positional adjustment can be carried out while the wall and the construction element remain connected in a direction transverse to the face of the wall, i.e. without need to move the main body and the adjustment body axially relative to each other or to the axis of the male fastener.

The building element may be secured transversely relative to the face of the wall using the male fastener, e.g. using the head in case the male fastener is embodied as a bolt, or a locking nut in case the male fastener is provided with a thread. Alternatively or in addition, a separate fastener may be provided for securing the building element transversely relative to the wall.

The adjustment body may be substantially cylindrical, e.g. to facilitate rotation about its central axis.

The adjustment body and plate shaped body may be displaceable relative to each other to switch the mounting bracket between the first state and the second state by relative movement.

The adjustment body and the plate shaped body may be displaceable between the first state and the second state by relative movement along the central axis of the adjustment part. In such embodiment, the adjustment body is typically moved along its central axis from its first state in a configuration in which the insertion portion is not inserted in the aperture, to its second state in a configuration in which the insertion portion is inserted in the aperture. The adjustment body may include a smooth cylindrical circumferential portion axially adjacent to the insertion portion, e.g. to facilitate rotation of the adjustment body about its axis by having the smooth circumferential portion inserted in the aperture in the main body while it is in the first position.

As an alternative or in addition, such relative movement may include relative movement of the adjustment body and the plate shaped body part about the central axis and/or transverse to the central axis of the elongate body of the adjustment part.

The plate shaped body may e.g. be displaceable between the first state and the second state by relative movement of the plate shaped body and the adjustment body at least transverse to the central axis of the adjustment part. In such embodiment, the adjustment body and the plate shaped body may typically be moved relative to each other transverse to the axis of the adjustment body to switch between the first state and the second. Preferably, the adjustment body and the plate shaped body are typically moved relative to each other transverse to the axis of the adjustment body to switch between the first state and the second while the insertion portion is arranged in the aperture. As an alternative or in addition, the adjustment body and plate shaped body may be displaceable relative to each other to switch the mounting bracket between the first state and the second state by relative movement about the central axis of the adjustment part.

This embodiment has as advantage that adjustment can be carried out parallel to the face of the building, with little or no movement perpendicular to the façade, so that e.g. a securing nut carried on the male fastener or its head needs to be slackened only a few turns to allow adjustment. Preferably, the adjustment body and the main body together have a higher potential gravitational energy when they are in the first state than in the second state. The gravitational load on the bracket can bias the form locking elements to the second, locking state. The relative movement of the main body and the adjustment body can be chosen to be essentially vertical.

To facilitate movement relative to the central axis, the aperture may be arranged to be oversized relative to the insertion portion. Advantageously, the insertion portion is in the first state rotatably disposed within the aperture, and is preferably surrounded by the aperture.

To allow for efficient transfer of force, the form locking elements of the insertion portion and the aperture may include flat surfaces that are arranged to support onto each other. Preferably, the form locking elements at both the outer circumference of the adjustment body and at the inner circumference of the aperture include a number of adjacent flat surfaces that extend at an angle relative to each other. The inner and outer circumferences preferably include at least a section of the circumference that is a polygonal circumference. Preferably, form locking elements are disposed about the full circumference of the insertion portion, and/or form locking elements are disposed about a portion of the circumference of the aperture only.

Advantageously, a first portion of the inner circumference of the aperture is provided with form locking elements, while leaving another portion of the inner circumference free. The aperture may then e.g. be substantially circular, with the upper or lower half of the inner circumference being provided with polygonal form locking elements, and the other half of the inner circumference being provided with a smooth circumference, and the insertion portion may then also be substantially circular with its full outer circumference being provided with corresponding polygonal form locking elements.

The adjustment body may include a radially extending flange part having a contact surface for contacting the surface of the main body part adjacent the aperture. This can facilitate axial positioning of the body part of the adjustment body relative to the aperture of the plate shaped body part of the main body of the bracket. The radially extending flange part may be provided with a tool engagement provision. This can facilitate adjustment. In particular, the flange part may at the circumference be provided with a hexagonal bolt head as tool engagement provision, so that the adjustment body can be driven to rotate about its axis using a spanner. This way, the adjustment body can easily be accessed and adjusted with a spanner via a thin planar interspace between the building element and the wall. In case the adjustment body and main body part are clamped onto each other by the male fastener, e.g. when the male fastener is used for securing the building element transversely relatively to the face of the wall, a second spanner can be used to access e.g. the head of the male fastener or a securing nut carried on the male fastener, so as to tighten and/or loosen the axial securing.

The radially extending flange part may alternatively or in addition be provided with a friction contact surface, e.g. by providing ribs or knurls, for contacting the surface of the main body part adjacent the aperture. This may further facilitate to secure the adjustment body against rotation in the second state even while positioned with highly laterally oriented eccentricity under heavy gravitational load.

The mounting bracket may e.g. be shipped in a disassembled condition in which the adjustment body is separate from the main body portion, i.e. not arranged in the aperture. In a (partly) assembled condition, and during operation in at least the second state, the adjustment body may be arranged in the aperture. In a (partly) assembled condition, and during operation a male fastener may be arranged in the hole. As set out before, this way, the male fastener, e.g. a bolt, can e.g. act as hinge pin during adjustment. Further, in a (partly) assembled condition and in operation, the male fastener may be connected to a building façade, in particular received in a blind hole of an anchor embedded in an edge surface of a concrete building floor. The male fastener may be provided as part of a mounting bracket shipped in disassembled condition, but can also be provided separately, e.g. as a staple product on the building site or be part of the construction element to wall to be connected. As an alternative, in a (partly) assembled condition and in operation, the male fastener may be connected to the concrete building element.

The plate shaped body part of the bracket may include a set of two apertures and adjustment bodies having one or more of the features discussed above. This facilitates levelling of the bracket, provides increased connective strength and provides for fail safe redundancy.

The bracket may include a support flange that extends transversely to the main body portion. Such support flange may include a substantially lying or horizontally extending support flange part, and a substantially upright or vertical /inclined support flange part. The support flange may be connected to the bracket via one or more stiffening diagonals, and/or a compression element may be provided between the support flange and the main body portion. The bracket may e.g. be formed from a stamped and folded sheet of metal, e.g. stainless steel, and is preferably weldless.

The mounting bracket may typically be arranged for force-transmitting connection of a first load bearing element, e.g. a construction element as mentioned above, to a second load bearing element, e.g. a building as mentioned above. The main body of the mounting bracket may thereto in use e.g. be provided with first coupling means for force-transmittingly coupling to a first construction element, e.g legs. The adjustment body may thereto in use be provided with second coupling means for force-transmittingly coupling said to a second construction element, e.g. the through hole for receiving a male fastener for connection to the second construction element. The first and/or second coupling means may be provided as a separate part, or as an integral part of the mounting bracket and adjustment body respectively, e.g. in case the connection is to be made retrospectively, e.g. in situ. The first and/or second coupling means may also be integral part of the first or second construction element respectively, e.g. in case the connection is to be made at manufacture, e.g. in the factory.

The invention further relates to a mounting construction for mounting a construction element to an upright plane of a building, in particular a prefabricated concrete construction element, the mounting construction including a set of at least two mounting brackets including features as discussed above to be arranged in the face of the building between the construction element and the building to transfer gravitational load, the mounting brackets being arranged to be transversely interspaced in the upright plane at distance of 0.5-5 meters, preferably 2-3 meters.

Still further, the invention relates to a building including a mounting construction as set out above, the mounting construction being arranged to mount a construction element, in particular a prefabricated concrete construction element, to an upright plane of the building, the mounting construction including a set of at least two mounting brackets with features as discussed above arranged in the face of the building between the construction element and the building to transfer gravitational load, the mounting brackets being transversely interspaced in the upright plane at distance of 0.5-5 meters, preferably 2-3 meters.

In addition, the invention relates to a construction element including a mounting construction as set out above, the mounting construction being arranged to mount the construction element to an upright plane of a building, the mounting construction including a set of at least two mounting brackets including features as discussed above arranged on the construction element to transfer gravitational load between the construction element and the face of the building, the mounting brackets being transversely interspaced in the upright plane at distance of 0.5-5 meter, preferably 2-3 meter.

Also, the invention relates to a method of adjusting a mounting bracket including features as discussed above, wherein the adjustment body and the plate shaped body are displaced relative to each other to switch the mounting bracket between a first state wherein the inner and outer circumferential form locking elements are disengaged and the adjustment body and the main body are free to rotate relative to each other, and a second state wherein the inner and outer circumferential form locking elements are form lockingly engaged and the adjustment body and the plate shaped body are rotationally fixed relative to each other, and wherein in the first state the adjustment body and the main body are rotated relative to each other so as to adjust a radial orientation of the eccentricity of the through hole relative to central axis, and wherein in the second state the inner and outer circumferential form locking elements are form lockingly engaged at a chosen radial orientation of the eccentricity of the through hole centerline of the through hole relative to the central axis.

In addition, the invention relates to a method of mounting a construction element to an upright plane of a building using a mounting bracket or a mounting construction including features as discussed above, in which the plate shaped body part(s) is/are connected to one of construction element and building, and in which the male fastener is fastened via the through hole into the other of construction element and building. Advantageously, the mounting bracket(s) are adjusted in accordance with the method of adjusting a mounting bracket as set out above. In particular, using a mounting construction as set out above, the construction element may be vertically and/or horizontally adjusted in the upright plane relative to the building by switching the mounting brackets between the first and second state, and by rotating the adjustment body and the main body of the respective mounting brackets relative to each other in the first state so as to adjust a radial orientation of the eccentricity of the through hole relative to central axis, and by engaging the inner and outer circumferential form locking elements at a chosen radial orientation of the eccentricity of the through hole centerline of the through hole relative to the central axis in the second state.

Switching from the second state to the first state and back again to the second state together with a radial reorientation of the eccentric distance may be accomplished by simple application of torque to the insertion portion while the insertion portion is arranged in the aperture, such that the adjustment body is rotated over a rotational increment in which the plate shaped body is lifted upwards against gravity and is subsequently moved downwards again under influence of gravity.

The above aspects of the invention individually alleviate disadvantages of mounting brackets, and in combination alleviate disadvantages further. The aspects of the invention together form an invention, but may each individually also be seen as inventions on their own and/or as inventive further elaborations of the same invention.

The invention will further be elucidated on the basis of exemplary embodiments which are represented in the drawings. The exemplary embodiments are given by way of non-limitative illustration of the invention.

In the drawings:
Fig. 1 shows an exploded view of a first embodiment of a mounting bracket in accordance with the invention;
Fig. 2a-d show a schematic front view of subsequent steps of positional adjustment using the mounting bracket of Fig. 1;
Fig. 3 shows an exploded view of a second embodiment of a mounting bracket in accordance with the invention;
Fig. 4 shows an exploded view of a third embodiment of a mounting bracket in accordance with the invention;
Fig. 5a-d respectively show a top perspective view, a top view, a bottom perspective view and a side view of an adjustment body of the mounting bracket of Fig.4;
Figs. 6a and 6b respectively show a front view and a perspective view of a detail of the body portion of the mounting bracket of Fig. 4;
Fig. 6c shows a rear perspective view of an alternative embodiment of the adjustment body;
Fig. 7 shows a rear perspective view of a further alternative embodiment of the adjustment body, and
Fig. 8 shows a front view of a detail of an alternative body portion of the mounting bracket.

It is noted that the figures are only schematic representations that are given by way of non-limited examples. In the figures, the same or corresponding parts are designated with the same reference numerals.

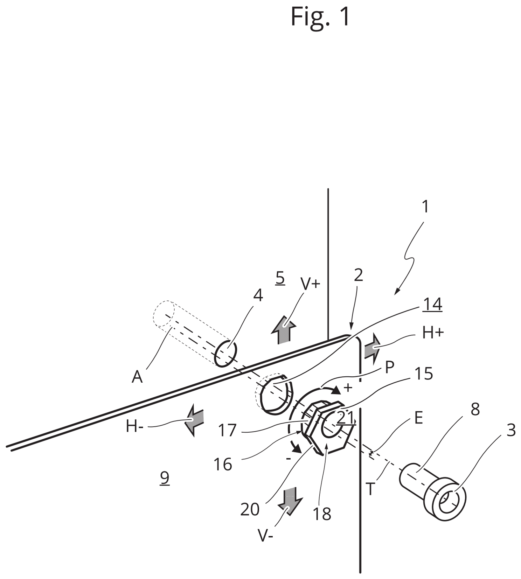

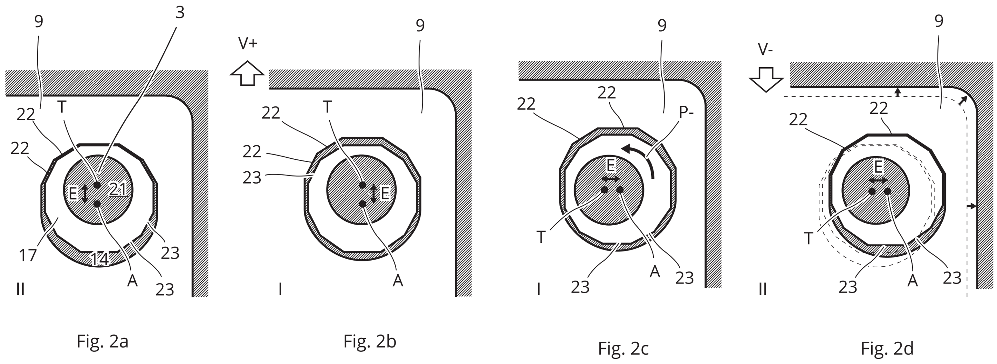

Fig. 1 and 2 show a first embodiment of a mounting bracket in accordance with the invention. Fig. 1 shows the mounting bracket 1 in an exploded view. The mounting bracket 1 includes a main body 2. The main body 2 is connected via a male fastener, here embodied as a bolt 3 to a blind hole 4 in the face 5 of an upright plane of a wall of a building. The blind hole 4 gives access to a hollow threaded connector embedded in the wall, and that is arranged to receive a threaded end 8 of the bolt 3.

The main body 2 of the mounting bracket 1 comprises a plate shaped body part 9. In this exemplary embodiment, the plate shaped body part 9 is planar and flat, and is integrally formed with the main body 2. In this example, the construction element to be connected may e.g. be a plate, and the main body may in this case be integrally formed with the construction element.

In this embodiment, the adjustment body 15 has a substantially cylindrical elongate body part 16 that extends along a central axis A that in use is oriented transversely to the plate shaped body part 9. The elongate body part 16 is provided with an insertion portion 17 that in use is inserted into an aperture 14 of the plate shaped body part 9 of the main body 2. The aperture 14 is arranged to be oversized relative to the insertion portion 17 so as to allow relative movement of the insertion portion 17 transverse to the main axis A within the aperture 14 in the vertical and horizontal direction in the upright plane as depicted with arrows H+/H- and V+/V-. The adjustment body 15 includes a radially extending flange part 18 having a contact surface 19 for contacting the surface of the main body part 9 adjacent the aperture. This facilitates axial positioning of the insertion portion 17 of the elongate body part 16 of the adjustment body 15 relative to aperture 14 of the plate shaped body part 9 of the main body 2 of the mounting bracket 1. The radially extending flange part 18 is at its circumference provided with a tool engagement provision that is formed by a hexagonal bolt head 20. Using the hexagonal bolt head 20, the adjustment body 15 can be driven to rotate about its axis A as depicted with arrow P+/P-using e.g. a spanner . The elongate body part 16 is further provided with a through hole 21 for receiving one of the bolts 3. The through hole 21 extends along a through hole centerline T at a constant interspace E along the central axis A, and thus forms an eccentric through hole 21. When a bolt 3 is received in the through hole 21, the bolt 3 may act as a hinge, and the elongate body part 16 may pivot eccentrically about the through hole centerline T, e.g. when driven to rotate with a spanner that engages the hexagonal bolt head 20.

Referring to Figs. 2, each aperture 14 is provided with inner circumferential form locking elements 22, and each insertion portion 17 is provided with outer circumferential form locking elements 23. The form locking elements 22, 23 at both the outer circumference of the adjustment body 15 and the inner circumference of the aperture 14 include a number of adjacent flat surfaces that extend at an angle relative to each other. The inner and outer circumferences 22,23 both include at least a section of the circumference that is of polygonal shape. Form locking elements 23 are disposed about the full circumference of the insertion portion, and form locking elements 22 are disposed about a portion of the circumference of the aperture 14 only. Specifically, an upper portion of the inner circumference of the aperture 14 is provided with form locking elements 23, while leaving a lower portion of the inner circumference free. The aperture 14 is thus substantially circular, with the upper half of the inner circumference being provided with polygonal form locking elements 22, and the lower half of the inner circumference being provided with a smooth circumference. The insertion portion 17 is also substantially circular with its full outer circumference being provided with corresponding polygonal form locking elements 23.

As can be seen in Figs. 2, the adjustment bodies 15 are in use displaceable relative to the plate shaped body 9 to switch the mounting bracket between a first state I and a second state II. In the second state II, as shown in Fig. 2a, the inner and outer circumferential form locking elements 22, 23 are form lockingly engaged and the adjustment body 15 and the plate shaped body 9 are rotationally fixed relative to each other.

By moving the plate shaped body 9 vertically upward in the direction of arrow V+ transversely to the central axis A, the adjustment body and plate shaped body are switched to the first state I. As shown in Fig, 2b, in the first state I the inner and outer circumferential form locking elements 22, 23 are disengaged. As show in Fig. 2c, the adjustment body 15 is rotated about its central axis in the direction of arrow P- relative to the plate shaped body 9 of main body 2 of the mounting bracket 1. This way the radial orientation of the eccentricity of the through hole 21 relative to central axis A is adjusted. As shown in Fig. 2c, a radial orientation of the eccentric distance E between the centerline T of the through hole 21 and the main axis A is achieved of which the upright and transverse components provide for the desired amount of positional adjustment, and an orientation of the plate shaped body part 9 relative to the adjustment body 15 is chosen. In particular, the orientation of the plate shaped body part 9 relative to the adjustment body 15 is chosen such that a support flange carried on the main body 2 of the mounting bracket 1 provides a level support for the façade element. As an alternative or in addition, the plate shaped body part 9 can be rotated relative to the adjustment body 15, in particular about the central axis A of the adjustment body 15.

As can be seen in Fig. 2d, by moving the plate shaped body 9 vertically downward in the direction of arrow V- transversely to the central axis A, the adjustment body and plate shaped body are switched back to the second state II. In the second state II the circumferential form locking elements 22, 23 are form lockingly engaged and the adjustment body 15 and the plate shaped body 9 are rotationally fixed relative to each other at the chosen radial orientation of the eccentricity of the through hole relative to central axis.

In this exemplary embodiment, the adjustment body is displaceable relative to the plate shaped body part 9 to switch the mounting bracket between the first state I and the second state II by transverse movement of the plate shaped body portion 9 relative to the central axis A of the insertion portion 17 of the adjustment body 15. In this embodiment, the movement from the first state to the second state takes place while the insertion portion 17 is arranged in the aperture 14.

As an alternative, the switching from the second state II to the first state I and back again to the second state II together with a radial reorientation of the eccentric distance E as shown in Figs. 2a - 2d can be accomplished by simple application of torque to the insertion portion while the insertion portion 17 is arranged in the aperture 14, such that the adjustment body is rotated over a rotational increment in which the plate shaped body 9 is lifted upwards in direction of V+ against gravity and is subsequently moved downwards again in direction of V- under influence of gravity. The energy imposed by application of torque during the lifting phase of the rotational increment via the torque is to be at least as high as the required increase in potential energy of the plate shaped body and any attached construction parts attached thereto that move against gravity. Such torque may thus be relatively high, and may be applied via a spanner engaging the hexagonal bolt head 20, e.g. a spanner with a long handle. The angle of a rotational increment can be chosen equal to 360° divided by the total number of outer circumferential form locking elements 23. By increasing the number of form locking elements, the angle of incremental rotation and the resulting distance of upward lift can be reduced. In adjustment by simple application of torque, it suffices to apply torque, i.e. no further adjustment action needs to be taken. However, the gravitational load on the bracket exerted via construction element, e.g. a prefab concrete balcony, may be during such simple application of torque still be reduced by applying upward force via hoist cables.

During assembly, a bolt 3 is passed through the through hole 21, and is provisionally screwed into place in the blind hole 4. In this embodiment, during adjustment the bolt 3 stays in the through hole 21. This way, the bolt 3 can act as hinge pin during adjustment. The form locking elements 22, 23 can relatively easily be disengaged and (re)engaged by moving the plate shaped body portion vertically relative to the adjustment body to switch the bracket between the first state I and the second state II.

In particular, in Fig. 2a the bracket is shown in the second state II with the form locking elements 22,23 engaged. By lifting the plate shaped body part 9 vertically upward relative to the central axis A of the adjustment body 15, the bracket is switched to the first state I in which the form locking elements 22,23 become disengaged, and the adjustment body 15 and the plate shaped body 9 of main body 2 of the mounting bracket 1 are free to rotate relative to each other. As shown in Fig. 2c, the adjustment body 15 is rotated 90° counter clockwise about the through hole centerline T of the eccentric through hole 21, using the bolt 3 as a hinge pin. This way, the radial orientation of the eccentricity E of the through hole centerline T of the through hole 21 relative to central axis A of the adjustment body is changed from vertically upward downward to horizontally leftward. As shown in Fig. 2d, by lowering the plate shaped body part 9 vertically downward relative to the central axis A of the adjustment body 15, the bracket is switched back to the second state II in which the form locking elements 22, 23 are engaged. The plate shaped body 9 has now been adjusted in position relative to the wall both vertically upward and horizontally sideward in the plane parallel to the upright wall. In the second state II the form locking elements are biased to engage under the gravitational load, and allow stabile transfer of shear and torsion, despite the eccentric position. As a final step, the bolt 3 is tightened to axially secure the mounting bracket 1 onto the wall.

This embodiment has as advantage that adjustment can be carried out parallel to the face of the building, with little or no movement perpendicular to the façade. Typically, bolt 3 needs to be slackened only a few turns to slacken any axial clamping of the adjustment body 15 onto the main body 9, and to allow positional adjustment of the plate relative to the wall.

The movement between the first state I and the second state II can be chosen to be essentially vertical, with the advantage that the gravitational load on the mounting bracket 1 engages the form locking elements 22, 23 to the second locking state II.

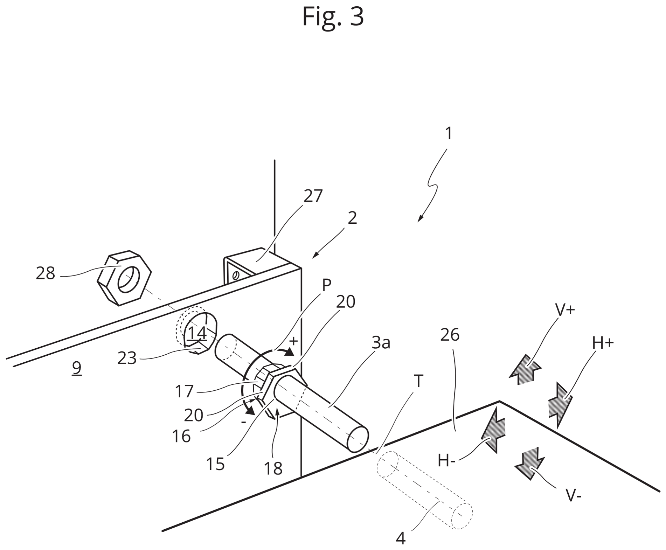

In Fig.3 a second embodiment of the mounting bracket 1 is shown, in which the bolt is replaced by a threaded end 3a, which is to be screwed into a blind hole 4 in a cantilevered beam 26 as construction element. The main body 2 of the bracket 1 is attached to a wall via legs 27. In this embodiment, a lower half of the inner circumference of the aperture 14 is provided with form locking elements 23, while upper half of the inner circumference is with a smooth circumference. The mounting bracket is brought to the first state I by lifting the beam, and to the second state II by lowering the beam. The bracket is axially secured by tightening lock nut 28. For the rest, the construction and operation is essentially the same as in the first embodiment.

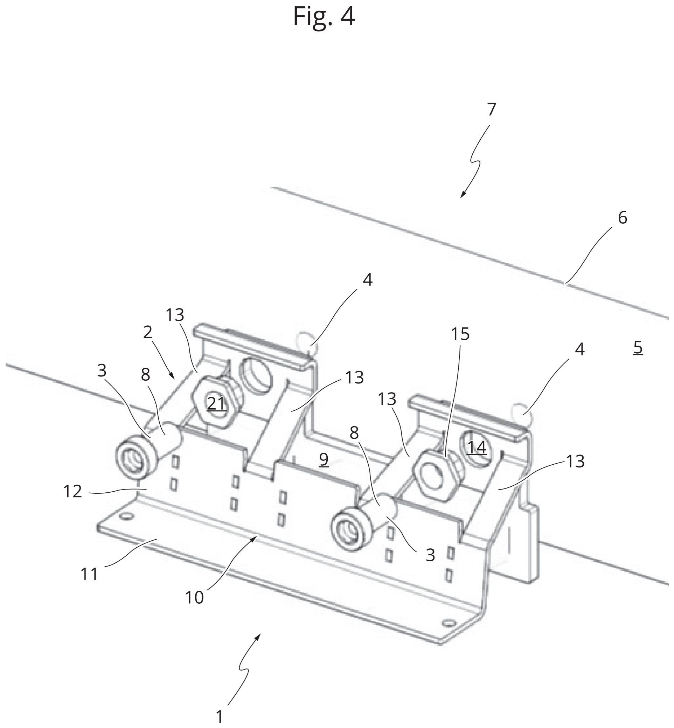

Fig. 4-6 show a third embodiment of a mounting bracket in accordance with the invention. It is a mounting bracket for mounting a construction element that is embodied as a precast concrete balcony as cantilevered façade element to the face of an upright wall that is embodied as the front face of a building. Fig. 4 shows the mounting bracket 1 in an exploded view. The mounting bracket 1 includes a main body 2 that is connected via bolts 3 to blind holes 4 in the front face 5 of the edge 6 of the concrete storey floor 7 that defines the front face of the building . The blind holes 4 each give access to a hollow threaded connector of an anchor (not shown) that has been embedded in the concrete of the storey floor 7 during in-situ casting, and that is arranged to receive a threaded end 8 of a bolt 3.

The main body 2 of the mounting bracket 1 comprises a plate shaped body part 9 that is to be mounted flush onto the front face 5 of the edge 6 of the storey floor 7. In this exemplary embodiment, the plate shaped body part 9 is planar and flat.

The mounting bracket 1 includes a support flange 10 that extends transversely to plate shaped body part 9 of the main body 2. The support flange 10 includes a substantially horizontally extending support flange part 11, and a substantially vertical upright support flange part 12 that may be arranged vertically, or inclined at a slant angle of e.g. 3-10° relative to the vertical, in particular 7-8°. The support flange 10 is connected to the plate shaped body part via four stiffening diagonals 13. In use, a compression element (not shown) may be provided between the support flange 10 and the plate shaped body part 9 of the main body portion or a pressure distribution plate, as well as thermal insulation material (also not shown). The main body 2 of the mounting bracket 1 is in this embodiment weldless, i.e. manufactured without any welds, and is formed by stamping it from a sheet of stainless steel, and by subsequently folding it.

The mounting bracket 1 in this exemplary embodiment is part of a compression part of a set of building sided coupling elements for cantilevered connection of the precast balcony. In use, the precast balcony is hoisted into position using a crane, and placed with a bottom edge that acts as slab sided compression coupling section part on the support flange 10. At the same time, building sided and slab sided coupling parts that have been cast into the concrete storey floor 7 and precast concrete balcony are engaged. When the mounting bracket is correctly positioned, i.e. fastened at the proper upright and transverse coordinates of the face of the building, and oriented such that the support flange 10 provides a level support for the façade element, building sided and balcony sided coupling parts are secured. Details of the coupling of the precast balcony to the concrete storey floor using a mounting bracket as compression part of a building sided coupling element are described in applicant's patent application NL 2036530. In that context, the precast concrete balcony may need to be hoisted in place several times, while shims are placed to adjust positioning and to ensure proper levelling of the balcony.

In this exemplary embodiment of the invention, the plate shaped body portion 9 of the main body 2 of the mounting bracket 1 of the exemplary embodiment is provided with two apertures 14, in each of which an adjustment body 15 is arranged.

Referring to Figs. 4-6, in this embodiment, each adjustment body 15 has a substantially cylindrical elongate body part 16 that extends along a central axis A that in use is oriented transversely to the plate shaped body part 9. The elongate body part 16 is provided with an insertion portion 17 that in use is inserted into one of the apertures 14 of the plate shaped body part 9 of the main body 2. Similar to Figs. 2, the apertures 14 are arranged to be oversized relative to the insertion portion 17 so as to allow relative movement of the insertion portion 17 transverse to the main axis A within the aperture 14. The adjustment body 15 includes a radially extending flange part 18 having a contact surface 19 for contacting the surface of the plate shape body part 9 adjacent the aperture. This facilitates axial positioning of the insertion portion 17 of the elongate body part 16 of the adjustment body 15 relative to aperture 14 of the plate shaped body part 9 of the main body 2 of the mounting bracket 1. The radially extending flange part 18 is at its circumference provided with a tool engagement provision that is formed by a hexagonal bolt head 20. Using the hexagonal bolt head 20, the adjustment body 15 can be driven to rotate about its axis A using a spanner. The elongate body part 16 is further provided with a through hole 21 for receiving one of the bolts 3. The through hole 21 extends along a through hole centerline T at a constant interspace E along the central axis A, and thus forms an eccentric through hole 21. When a bolt 3 is received in the through hole 21, the bolt 3 may act as a hinge, and the elongate body part 16 may pivot eccentrically about the through hole centerline T, e.g. when driven to rotate with a spanner that engages the hexagonal bolt head 20.

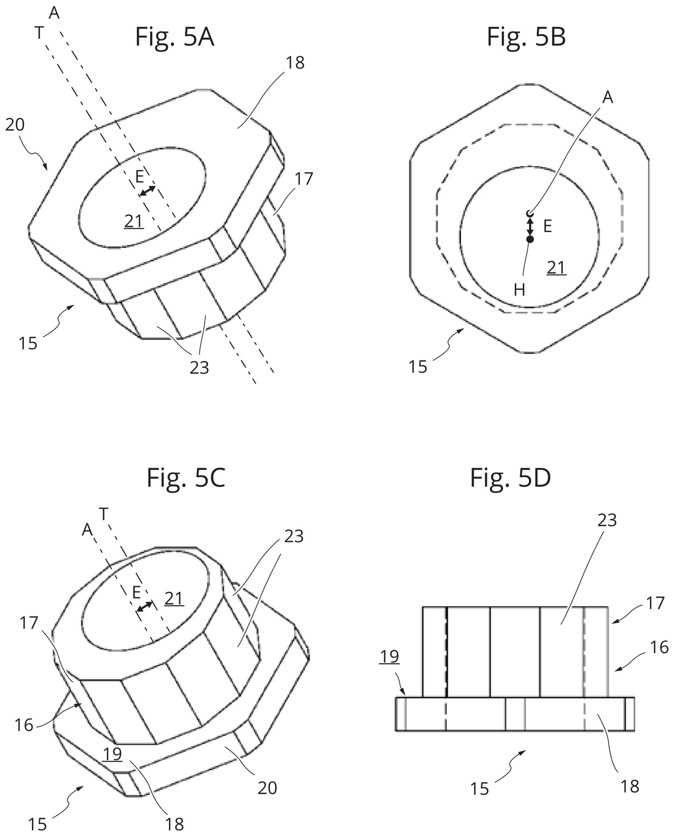

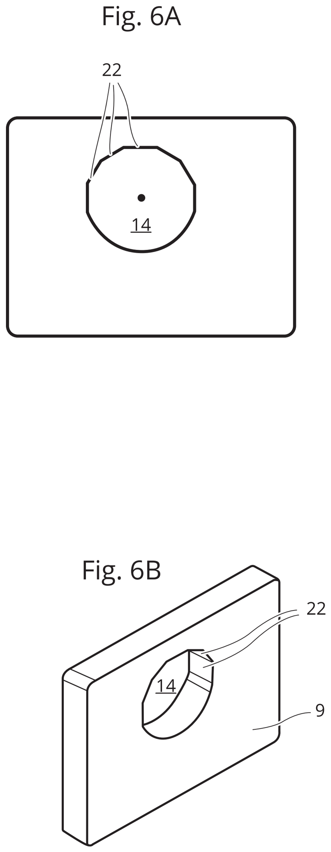

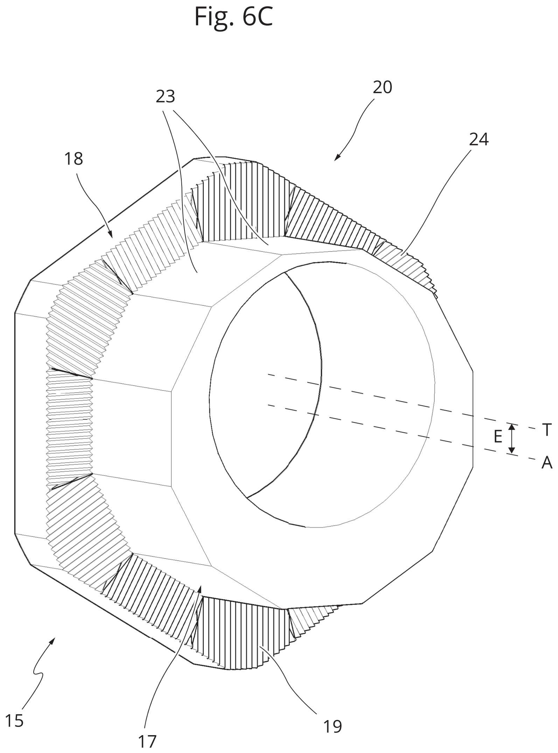

Referring to Figs. 5 and 6, each aperture 14 is provided with inner circumferential form locking elements 22, and each insertion portion 17 is provided with outer circumferential form locking elements 23.

The form locking elements 22, 23 at both the outer circumference of the adjustment body 15 and the inner circumference of the aperture 14 include a number of adjacent flat surfaces that extend at an angle relative to each other. The inner and outer circumferences 22, 23 both include at least a section of the circumference that is of polygonal shape. Form locking elements 23 are disposed about the full circumference of the insertion portion, and form locking elements 22 are disposed about a portion of the circumference of the aperture 14 only. Specifically, an upper portion of the inner circumference of the aperture 14 is provided with form locking elements 23, while leaving a lower portion of the inner circumference free. The aperture 14 is thus substantially circular, with the upper half of the inner circumference being provided with polygonal form locking elements 22, and the lower half of the inner circumference being provided with a smooth circumference. The insertion portion 17 is also substantially circular with its full outer circumference being provided with corresponding polygonal form locking elements 23.

The adjustment bodies 15 are in use displaceable relative to the plate shaped body 9 to switch the mounting bracket between a first state I and a second state II. In the first state I the inner and outer circumferential form locking elements 22, 23 are disengaged and the adjustment body 15 and the plate shaped body 9 of main body 2 of the mounting bracket 1 are free to rotate relative to each other so as to adjust a radial orientation of the eccentricity of the through hole 21 relative to central axis A. This way, a radial orientation of the eccentric distance E between the through hole centerline T of the through hole 21 and the main axis A is achieved of which the upright and transverse components provide for the desired amount of positional adjustment, and an orientation of the plate shaped body part 9 relative to the adjustment body 15 is chosen such that the support flange 11 carried on the main body 2 of the mounting bracket 1 provides a level support for the façade element.

In the second state II the circumferential form locking elements 22, 23 are form lockingly engaged and the adjustment body 15 and the plate shaped body 9 are rotationally fixed relative to each other at a chosen radial orientation of the eccentricity of the through hole relative to central axis.

In this exemplary embodiment, the adjustment bodies 15 are each displaceable relative to the plate shaped body part 9 to switch the mounting bracket between the first state I and the second state II by transverse movement of the plate shaped body portion 9 relative to the central axis A of the insertion portion 17 of the adjustment body 15 transverse to the central axis A relative to the of the adjustment part. In this embodiment, the movement from the first state to the second state takes place while the insertion portion 17 is arranged in the aperture 14.

During assembly, a bolt 3 is passed through the through hole 21, and is provisionally screwed into place in the blind hole 4. In this embodiment, during adjustment the bolt 3 stays in the through hole 21. This way, the bolt 3 can act as hinge pin during adjustment. The form locking elements 22,23 can relatively easily be disengaged and (re)engaged by moving the plate shaped body portion vertically relative to the adjustment body to switch the bracket between the first state I and the second state II. In the second state II the form locking elements allow stable transfer of shear and torsion, despite the eccentric position. When the mounting bracket 1 is correctly positioned, it is brought in the second state II, and the bolt 3 is tightened to lock the mounting bracket 1 onto the façade of the building.

This embodiment has as advantage that adjustment can be carried out parallel to the face of the building, with little or no movement perpendicular to the façade. Typically, bolts 3 needs to be slackened only a few turns to slacken any axial clamping of the adjustment body 15 onto the main body in place due to securing of the construction element transversely to the face of the building, and to allow positional adjustment of the construction element relative to the building along the face of the building.

The movement between the first state I and the second state II can be chosen to be essentially vertical, with the advantage that the gravitational load on the mounting bracket 1 exerted by the balcony biased the form locking elements 22,23 to the second, locking state II.

Referring to Fig. 6c, in an alternative embodiment of the adjustment body 15 the contact surface 19 of the radially extending flange part 18 is profiled, e.g. by ribs 24 or enhanced roughness, to increase the friction and thus the frictional force between adjustment body 15 and main body 2 in locking state II.

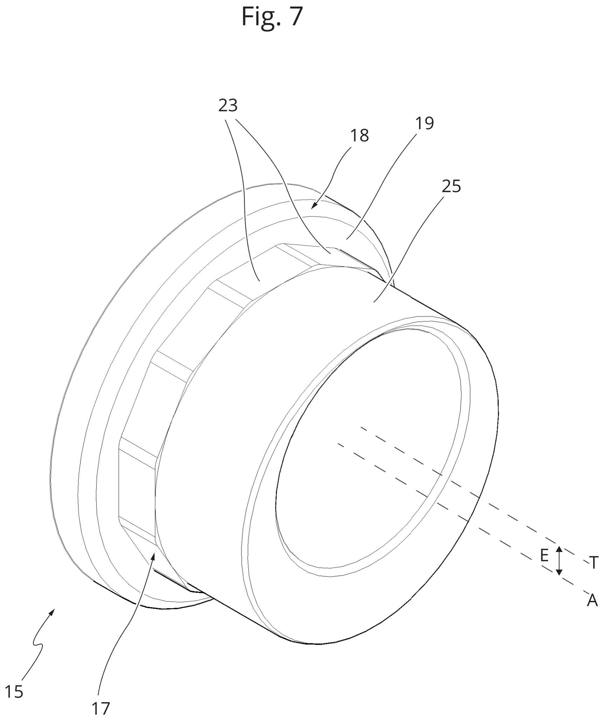

Referring to Fig. 7 in a further alternative embodiment of the adjustment body 15 a smooth cylindrical circumferential portion 25 is provided axially adjacent to the insertion portion 17.

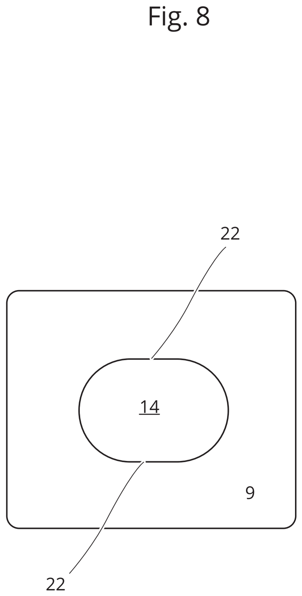

Referring to Fig. 8 in an alternative embodiment of the main body 2, the aperture 4 in the plate shaped body 9 is formed as an oblong hole, with flat upper and lower surfaces as inner form locking elements.

The adjustment body 15 of Fig. 7 and the main body of Fig. 8 cooperate to form a further embodiment of the mounting bracket. In this further embodiment, the adjustment body 15 is moved along its central axis A from its first state I in a configuration in which the insertion portion 17 is not inserted in the aperture 4, to its second state II in a configuration in which the insertion portion is inserted in the aperture, so that the inner circumferential form locking elements 22 engage with the outer form locking elements 23.

In contrast to the embodiment of Figs. 1-3, in the embodiment of Figs. 7 and 8 the adjustment body 15 is moved along its central axis A from its first state I in a configuration in which the insertion portion 17 is not inserted in the aperture 4, to its second state II in a configuration in which the insertion portion is inserted in the aperture. Adjustment may then take place by rotating of the adjustment body 9 about the central axis A of the insertion portion 17 of the adjustment body 15 while the insertion portion 17 is outside the aperture 14. Adjustment by rotation of the adjustment body 15 about its axis A is facilitated by having the smooth circumferential portion 25 inserted in the aperture 4 of the plate shaped body 9 while in the first state I. In this type of embodiment, the aperture 4 may be arranged to be the same size and shape as the insertion portion 17, so that in the second state it form-fittingly surrounds the insertion portion 17.

Many variations will be apparent to the skilled person in the art. For example, the mounting bracket may be provided with only one adjustment body and one aperture. Also, the mounting bracket may be used to connect construction elements of other materials than concrete, e.g. stone, steel, plastic or wood. In addition, the mounting bracket may be used to connect construction elements of other types than balconies and façade plates to walls of a building, e.g. bars or plates, and may also be used for connection in the plane of the wall instead of the cantilevered connection of the exemplary embodiment. Furthermore, variations of the hexagonal shaped bolt heads, such as any other polygonal shaped bolt head, e.g. tetragonal, square, and star shaped bolt heads, would be apparent to the skilled person in the art and are meant to be covered by the term hexagonal bolt head as used herein.. Additionally the terms main body, main body part, and main body portion as used herein can refer to the same element, similarly male fastener and male connector as used herein can refer to the same element. Such variations are understood to be comprised within the scope of the invention as defined in the appended claims.

### List of reference signs

- 1.: Mounting bracket
- 2.: Main body
- 3.: Bolt
- 4.: Blind hole
- 5.: Front face
- 6.: Edge
- 7.: Concrete storey floor
- 8.: Threaded end
- 9.: Plate shaped body
- 10.: Support flange
- 11.: Horizontally extending flange part
- 12.: Vertically extending flange part
- 13.: Stiffening diagonal
- 14.: Aperture
- 15.: Adjustment body
- 16.: Elongate body part
- 17.: Insertion portion
- 18.: Flange part
- 19.: Contact surface
- 20.: Hexagonal bolt head
- 21.: Through hole
- 22.: Inner circumferential form locking elements
- 23.: Outer circumferential form locking elements
- 24.: Ribs
- 25.: Smooth cylindrical circumferential portion
- 26.: Beam
- 27.: Legs
- 28.: Lock nut

- I: First state
- II: Second state
- A: Central axis
- E: Eccentricity
- H+: Horizontal right movement arrow
- H-: Horizontal left movement arrow
- V+: Vertical up movement arrow
- V-: Vertical down movement arrow
- T: Through hole centerline

## Claims

1. A mounting bracket (1), comprising a main body (2) having a plate shaped body part (9) that is provided with an aperture (14), and an adjustment body (15) having an elongate body part (16) that extends along a central axis (A) that in use is oriented transversely to the plate shaped body part (9), the elongate body part (16) being provided with an insertion portion (17) for insertion into the aperture (14) of the main body part (2), and with a through hole (21) for receiving a male fastener (3), the through hole (21) extending along a through hole centerline (T) at an interspace eccentrically along the central axis (A), wherein the aperture (14) is provided with inner circumferential form locking elements (22) and wherein the insertion portion (17) is provided with outer circumferential form locking elements (23), and wherein the adjustment body (15) and the plate shaped body (9) are in use displaceable relative to each other to switch the mounting bracket (1) between a first state (I) wherein the inner and outer circumferential form locking elements (22, 23) are disengaged and the adjustment body (15) and the main body (2) are free to rotate relative to each other so as to adjust a radial orientation of the eccentricity (E) of the through hole (21) relative to central axis (A), and a second state (II) wherein the inner and outer circumferential form locking elements (22, 23) are form lockingly engaged and the adjustment body (15) and the plate shaped body (9) are rotationally fixed relative to each other at a chosen radial orientation of the eccentricity (E) of the through hole centerline (T) of the through hole (21) relative to the central axis (A).

2. The mounting bracket (1) of claim 1, wherein the adjustment body (15) and plate shaped body (9) are displaceable between the first state (I) and the second state (II) by relative movement along the central axis (A) of the adjustment part.

3. The mounting bracket (1) of claim 1 or 2, wherein the adjustment body (15) and plate shaped body (9) are switchable between the first state (I) and the second state (II) by relative movement at least transverse to the central axis (A) of the adjustment part.

4. The mounting bracket (1) of any of claims 1-3, wherein the aperture (14) is oversized relative to the insertion portion (17).

5. The mounting bracket (1) of any of claims 1-4, wherein the form locking elements (22, 23) include flat surfaces that are arranged to support onto each other, preferably a number of adjacent flat surfaces that extend at an angle relative to each other.

6. The mounting bracket (1) of any of claims 1-5, wherein form locking elements (22, 23) are disposed about the full circumference of the insertion portion (17).

7. The mounting bracket (1) of any of claims 1-6, wherein form locking elements (22, 23) are disposed about a portion of the circumference of the aperture (14) only, preferably an upper or lower half of the circumference, leaving another portion of the circumference, preferably the other half of the circumference, free.

8. The mounting bracket (1) of any of claims 1-7, wherein the adjustment body (15) includes a radially extending flange part (18) having a contact surface (19) for contacting the surface of the main body part (2) adjacent the aperture (14).

9. The mounting bracket (1) of claim 8, wherein the radially extending flange part (18) is provided with a tool engagement provision.

10. The mounting bracket (1) of claim 9, wherein the tool engagement provision has a hexagonal shape.

11. The mounting bracket (1) of any of claims 8 -10, wherein the radially extending flange part (18) is provided with a friction contact surface (19) for contacting the surface of the main body part (2) adjacent the aperture (14).

12. The mounting bracket (1) of any of the preceding claims, wherein the adjustment body (15) is arranged in the aperture (14).

13. The mounting bracket (1) of any of the preceding claims, wherein a male fastener, preferably a bolt (3), is arranged in the through hole (21).

14. The mounting bracket (1) of any of the preceding claims wherein the adjustment body (15) includes a smooth cylindrical circumferential portion (25) axially adjacent to the insertion portion (17).

15. The mounting bracket (1) of any of the preceding claims, wherein the plate shaped body part (9) of the bracket includes a set of two apertures (14) and adjustment bodies (15) in accordance with any of the preceding claims.

16. The mounting bracket (1) of any of the preceding claims, wherein the bracket includes a support flange (10) that extends transversely to the main body portion (2).

17. The mounting bracket (1) of claim 16 wherein the support flange (10) is connected to the bracket via one or more stiffening diagonals (13).

18. The mounting bracket (1) of any of claims 15-17 wherein a compression element is provided between the support flange (10) and the main body portion (2).

19. The mounting bracket (1) of any of the preceding claims wherein the bracket is formed from a stamped and folded sheet of metal.

20. The mounting bracket (1) of any of the preceding claims 13-19 wherein the male connector is connected to a building element, in particular received in a blind hole (4) of an anchor embedded in an edge (6) surface of a concrete building floor or façade element.

21. A mounting construction for mounting a construction element to an upright plane of a building, in particular a prefabricated concrete construction element, the mounting construction including a set of at least two mounting brackets (1) according to any of the preceding claims to be arranged in the face of the building between the construction element and the building to transfer gravitational load, the mounting brackets (1) being arranged to be transversely interspaced in the upright plane at distance of 0.5-5 meters, preferably 2-3 meters.

22. A building including a mounting construction of claim 21, the mounting construction being arranged to mount a construction element, in particular a prefabricated concrete construction element, to an upright plane of the building, the mounting construction including a set of at least two mounting brackets (1) according to any of claims 1-20 arranged in the face of the building between the construction element and the building to transfer gravitational load, the mounting brackets (1) being transversely interspaced in the upright plane at distance of 0.5-5 meters, preferably 2-3 meters.

23. A construction element including a mounting construction of claim 21, the mounting construction being arranged to mount the construction element to an upright plane of a building, the mounting construction including a set of at least two mounting brackets (1) according to any of claims 1-20 arranged on the construction element to transfer gravitational load between the construction element and the face of the building, the mounting brackets (1) being transversely interspaced in the upright plane, at a distance of 0.5-5 meters, preferably 2-3 meters.

24. A method of adjusting a mounting bracket (1) according to any of claims 1-20 wherein the adjustment body (15) and the plate shaped body (9) are displaced relative to each other to switch the mounting bracket (1) between a first state (I) wherein the inner and outer circumferential form locking elements (22, 23) are disengaged and the adjustment body (15) and the main body (2) are free to rotate relative to each other, and a second state (II) wherein the inner and outer circumferential form locking elements (22, 23) are form lockingly engaged and the adjustment body (15) and the plate shaped body (9) are rotationally fixed relative to each other, and wherein in the first state (I) the adjustment body (15) and the main body (2) are rotated relative to each other so as to adjust a radial orientation of the eccentricity (E) of the through hole (21) relative to central axis (A), and wherein in the second state (II) the inner and outer circumferential form locking elements (22, 23) are form lockingly engaged at a chosen radial orientation of the eccentricity (E) of the through hole centerline (T) of the through hole (21) relative to the central axis (A).

25. A method of mounting a construction element to an upright plane of a building using a mounting bracket (1) according to any of claims 1-20 or a mounting construction according to claim 21, in which the plate shaped body part(s) (9) is/are connected to one of construction element and building, and in which the male fastener is fastened via the through hole (21) into the other of construction element and building.

26. The method of claim 25, in which the mounting bracket(s) (1) are adjusted in accordance with the method of claim 24.

27. The method of any of claims 24-26, wherein the construction element is vertically and/or horizontally adjusted in the upright plane relative to the building by switching the mounting brackets (1) between the first and second state (II), by rotating the adjustment body (15) and the main body (2) of the respective mounting brackets (1) relative to each other in the first state (I) so as to adjust a radial orientation of the eccentricity (E) of the through hole (21) relative to central axis (A), and by engaging the inner and outer circumferential form locking elements (22, 23) at a chosen radial orientation of the eccentricity (E) of the through hole centerline (T) of the through hole (21) relative to the central axis (A) in the second state (II).

28. The method of claim 27, wherein switching from the second state (II) to the first state (I) and back again to the second state (II) together with a radial reorientation of the eccentric distance is accomplished by simple application of torque to the insertion portion (17) while the insertion portion (17) is arranged in the aperture (14), such that the adjustment body (15) is rotated over a rotational increment in which the plate shaped body (9) is lifted upwards against gravity and is subsequently moved downwards again under influence of gravity.
